# EUROPÄISCHE PATENTSCHRIFT

(11) **EP 1 500 595 B1**
(45) Veröffentlichungstag und Bekanntmachung des Hinweises auf die Patenterteilung: **14.07.2010**
(21) Anmeldenummer: 03746019.3
(22) Anmeldetag: 04.04.2003
(51) Int. Cl.: B65D 1/00, C08G 73/00, C07C 279/00, A23L 3/3535, A23L 3/3553, A01N 47/44, A61L 2/16, A22C 13/00, B65D 81/28

(54) **VERFAHREN ZUM SCHÜTZEN VON VERPACKTEN LEBENSMITTELN VOR VERDERBEN WÄHREND DER LAGERUNG UND VERPACKUNG ODER VORGESCHNITTENE VERPACKUNG ZUM LAGERN VON LEBENSMITTELN**
METHOD FOR PROTECTING PACKED FOOD PRODUCTS FROM SPOILAGE DURING STORAGE AND PACKAGE OR PRE-CUT PACKAGE FOR STORING FOOD PRODUCTS
PROCEDE POUR PRESERVER LES PRODUITS ALIMENTAIRES CONSERVES DANS LEUR EMBALLAGE DE LA DETERIORATION ET EMBALLAGE OU SEMI-PRODUIT POUR EMBALLAGE DESTINE A LA CONSERVATION DE PRODUITS ALIMENTAIRES

(30) Priorität: 05.04.2002 UA 02042743
(43) Veröffentlichungstag der Anmeldung: 26.01.2005
(73) Patentinhaber: Falendysh, Nina Feodosievna, Kiev 3142 (UA)
(72) Erfinder: FALENDYSH, Nina Feodosievna, Kiev, 03142 (UA); MYSAN, Grygoriy Fedorovich, Kiev, 02222 (UA); SYCHEVSKIY, Nikolai Petrovich, Kiev, 01024 (UA); TEMNYK, Oksana Yevgenievna, Lvov, 79014 (UA)
(74) Vertreter: Jeck, Anton
(86) Internationale Anmeldenummer: PCT/UA2003/000012
(87) Internationale Veröffentlichungsnummer: WO 2003/084820

(56) Entgegenhaltungen:
- EP-A- 0 297 538
- EP-A- 0 384 319
- EP-A- 0 750 853
- EP-A- 1 110 948
- EP-A- 1 114 585
- GB-A- 703 242
- GB-A- 822 758
- RU-C1- 2 169 163
- US-A- 2 858 225
- US-A- 3 860 729
- US-A- 4 666 956
- US-A- 5 573 797
- US-A- 5 573 800
- US-A- 5 573 801
- PATENT ABSTRACTS OF JAPAN Bd. 2002, Nr. 06, 4. Juni 2002 (2002-06-04) & JP 2002 038032 A (DAIWA KAGAKU KOGYO KK; SK CORP), 6. Februar 2002 (2002-02-06)

## Beschreibung

Einer der Hauptgründe des Verderbens von Produkten, einschließlich Nahrungsmitteln, hängt mit der Aufbewahrung der Produkte in Verpackungen unter der Einwirkung von Mikroorganismen zusammen, die für diese Art der Produkte schädlich sind. Beispielsweise leiden flüssige Lebensmittel, wie Bier, Säfte, Wasser, alkoholfreie oder alkoholarme Getränke, oft unter der Einwirkung von Bakterien und mikroskopischen Pilzen, die in zulässigen Mengen im Produkt enthalten sind oder in das Produkt bei seinem Abpacken in die Verpackung gelangen und sich später vermehren.

Dieses Problem könnte durch Verwendung von bekannten Nahrungskonservierungsmitteln (Nahrungssäuren, Natriumbenzonat usw.) gelöst werden, doch deren Verwendung ist aus medizinischer Sicht nicht immer gerechtfertigt und ist im Fall von Bier und Trinkwasser wegen des negativen Einflusses der Konservierungsmittel auf den Geschmack des Produkts und wegen des Verbots durch staatliche Vorschriften (zum

Beispiel ÄCTY 3888-99 und ÄCTY 878-93) nicht möglich.

Deshalb gilt in der Praxis als eines der Hauptverfahren zum Schutz solcher Produkte vor der Kontamination durch Mikroorganismen die aseptische Bearbeitung der Verpackung, der Ausrüstung (Kommunikation, Dosieranlagen usw.), der technologischen Materialien (zum Beispiel Spülwasser) und die Sterilisation von Getränken unmittelbar vor dem Abfüllen der Getränke.

So ist allgemein bekannt, dass für die Sicherung des aseptischen Zustands des Verpackungsglases dieses mit chemischen Waschmitteln bei hoher Temperatur bearbeitet wird, mit heißem und kaltem Wasser und im letzten Stadium mit Wasser abgespült wird, das vorher mit Chlor, Ozon oder UV-Bestrahlung bearbeitet worden ist.

Die Praxis zeigt jedoch, dass diese Technologie nicht immer die Haltbarkeit des Getränks innerhalb derjenigen Frist sicherstellen kann, die von den staatlichen Vorschriften vorgesehen sind, weil im Bereich des Vorschubs des Verpackungsglases in die Abfüll- und Verschließeinheit und im Laufe der Füllung und dem Verschließen der Flaschen die Infizierung der Flaschen und des Getränks höchst wahrscheinlich ist.

Für die Verlängerung der Haltbarkeitsfrist von Bier, das in Glas- und PET-Flaschen (Flaschen aus Polyterephthalsäureglykolester) abgefüllt wird, wurde schon vorgeschlagen, die Flasche vor dem Abfüllen des Biers mit technologischem Wasser zu spülen, das Chlor enthält, und die Flasche durch Entfernen einer Gasmischung zu 90% zu evakuieren und dann mit Kohlendioxid durchzublasen. Die Operation der Evakuierung und des Durchblasens wird zweimal vorgenommen. Die Flaschen werden mit dem Getränk abgefüllt, das das Kohlendioxid verdrängt, und mit Abdeckkappen verschlossen (R. Fat. Syttard. "Die speziellen Forderungen an die Flaschen aus Polyfunkmaterialien, die beim Abfüllen von Bier verwendet werden", Brauwelt, 2000, Nr. 4, S. 5-6).

Dieses Verfahren hat auch Nachteile, zu denen vor allem folgende gehören:

Chlor, das im gasartigen Zustand in der Flasche nach der Entfernung des Spülwassers bleibt, verdunstet als ein eher flüchtiger Stoff im Vergleich zur Luft bei der Evakuierung mit Chlor zuerst aus der Flasche, wodurch Bedingungen geschaffen werden, bei denen Mikroorganismen in die Flasche sowohl aus der Luft, als auch aus dem Bier beim Abfüllen gelangen können. Die Abwesenheit eines antiseptischen Mittels in der Flasche schafft Bedingungen für eine intensive Vermehrung der Mikroorganismen und für eine Verschlechterung der Haltbarkeit und der Qualität des Biers. Chlor gilt als gesundheitsschädlicher Stoff. Als starkes Oxydiermittel trägt das Chlor zur Korrosion der Ausrüstung bei (dies bezieht sich auch auf Ozon, Peroxide und Säuren).

Ferner ist durch die DE 199 449 692 ein Verfahren zur Sterilisation (Desinfektion) von PET-Flaschen unter Verwendung von Wasserstoffperoxid bekannt. Das Verfahren sieht folgende Schritte vor:
- das Einblasen von Peroxid als Aerosol in die Flasche unter Bildung einer Kondensatschicht an ihren Innenwänden, wobei das Peroxid auf eine solche Temperatur erwärmt wird, dass die Sterilisation (Ti) initiiert wird,
- das Einblasen von steriler Luft, die auf eine Temperatur erwärmz wird, die höher als die für Ti ist, für die Umwandlung des Kondensats in Dampf,
- die Entfernung von restlichem Peroxid mittels einer zusätzlichen Einführung von steriler Luft.

Das oben beschriebene Verfahren ermöglicht, einen hohen Grad der Keimfreiheit der Verpackung zu gewährleisten. Jedoch kann sogar eine solche hochsterile Verpackung durch die nicht sterile Luft beim Vorschub in die Abfülleinheit infiziert werden, d.h., es gibt keine Garantie dafür, dass sich die in diese Verpackung abgefüllten Getränke lange Zeit ohne Verderben erhalten werden: die geringste Menge an Mikroorganismen, die in die Verpackung und das Getränk beim Abfüllen und dem Verschließen gelangen, kann die Veränderung der Getränkequalität bei der Getränkelagerung verursachen, von der leichten Trübung und der Veränderung des Geschmacks bis zur vollen Untauglichkeit für den Verbrauch (A.Sokolenko und andere, "Aseptische Vorbereitung der Glasverpackung", Lebensmittel und Verarbeitungsindustrie, 1999, Nr. 1-2, S. 38-39).

Außerdem können die Getränke, die ausgeschenkt werden, eine bestimmte Menge an

Mikroorganismen enthalten, die die Unbeständigkeit der Getränke sogar beim Abfüllen in die aseptische Verpackung oft verursachen. Zum Beispiel im letzten Stadium der Reinigung des Bieres, sowohl in den modernen, als auch in den klassischen Läutereinheiten dringen in das filtrierte Bier von 0,001 bis zu 1,0 % der Mikroorganismen ein, die im nicht filtrierten Bier enthalten sind.

Noch komplizierter ist das Problem der Qualitätssicherung von unvergastem abgefüllten Mineral- und Trinkwasser. Bei der Abwesenheit der Konservierungsmittel erweist sich sogar die kleine Menge der Mikroorganismen, die in das Wasser im Stadium seiner Vorbereitung oder des Abfüllens gelangen, als ausreichend, um in 5 - 8 Tagen nach der Verschließung eine intensive Vermehrung der Mikroben zu verursachen, die in den meisten Fällen in der mikrobiologischen Analyse mit der Kennndate "ununterbrochenes Wachstum" charakterisiert werden und auf die Untauglichkeit des Wassers zum Verbrauch hinweist. Ähnliche Probleme entstehen auch bei der Aufbewahrung von Säften, Nektar und anderer Getränke.

Anschließend sei zu bemerken, dass die Infizierung der Nahrungsmittel durch Mikroorganismen nicht nur ökonomische Folgen hat, sondern auch sich negativ auf die Gesundheit der Menschen auswirkt.

Die oben erwähnten Probleme waren durch den Einsatz als Konservierungsmittel von Polyhexamethylenguanidin Hydrochlorid (Synonym- Polyhexamethylenguanidin Chlorid) teilweise gelöst. Wie im US 3860729 beschrieben ist, wir dieses biozide Polymer in die Getränke vor ihrem Abfüllen in die Verpackung für den Schutz vor der unerwünschten Vermehrung der Mikroorganismen hinzugefügt. Ungeachtet der relativen Unschädlichkeit von Polyhexamethylenguanidin Hydrochlorid ist jedoch seine Anwesenheit in dem verbrauchten Getränk unerwünscht. Um so mehr, dass für die Konservierung die mehr toxische niedermolekulare Form verwendet wird. Außerdem werden als antiseptischen Mittel, zum Beispiel für die Lebensmittelausrüstung ( darunter auch das Waschen der Gläser und anderer Tara in Gaststätten und anderen derartigen Einrichtungen) die Polymere von Biguanid (GB, 703242) verwendet. Jedoch gewährleistet solch eine Bearbeitung der Verpackung die Möglichkeit der langfristigen Aufbewahrung der Getränke und der anderen Lebensmittel aus dem weiter unten beschriebenen Grund nicht.

Aus der EP-A-1 110 948 und aus den Patent Abstracts of Japan, Bd. 2002, Nr. 06, und JP 2002 038032 A sind antimikrobielle Kunststoffe bekannt, die Polyhexamethylenguanidin mit einem Molekülgewicht von 1000 oder größer als antimikrobiellen Wirkstoff enthalten. Die Produkte können als Film, der als Verpackungsmaterial verwendet wird, vorliegen. Der antimikrobielle Wirkstoff lässt sich nur schwer aus dem Kunststoff auswaschen. In der genannten japanischen Anmeldung sind PHMG enthaltende Polymerfilme für Verpackungen beschrieben. Diese beiden bekannten Patentanmeldungen betreffen Verfahren zum Überführen des bioziden Salzes des Polyheyamethylenguanidin-Phosphats (PHMG-Phosphats) aus dem lösbaren Zustand in ein hartes Pulver und komplexe, mehrstufige Hochtemperatursynthesen, die in der Mischung harter, zerkleinerter Polymere (Polyethylen, Polypropylen, Polystyrol) mit einem harten Pulver aus PHMG-Phosphat als einzige biozide Komponente und nachfolgender, langzeitiger Einwirkung einer hohen Temperatur, eines Drucks und weiterer Faktoren besteht. Die auf diese Weise hergestellte Folie verfügt über antimikrobielle Eigenschaften. Es fehlen aber bestimmte Beispiele für die Verwendung zum Schutz von Lebensmitteln gegen mikrobielles Verderben, die die Einschätzung von biotechnologischen Eigenschaften der Folie unter bestimmten Einsatzbedingungen zulassen, Bei den beiden bekannten Verfahren wird damit die Einführung eines bioziden Zusatzstoffs in die chemische Zusammensetzung des Polymers im Rahmen einer aufwändigen Hochtemperatursynthese verwendet. Der biozide Zusatzstoff ist in der Polymermatrix gesperrt, die seine biozide Aktivität teilweise behindert. Für ein Polymer mit einem bioziden Zusatzstoff in der Zusammensetzung, der in der Matrix gesperrt ist, ist aber die Diffusion eines größeren Moleküls erschwert, wenn keine weiteren Einflussfaktoren vorhanden sind.

### Zusammenfassung der Erfindung

Die Aufgabe der Erfindung besteht darin, ein wirksames Verfahren zum Schutz von Produkten, vorzugsweise Nahrungsmitteln, vor mikrobiellem Verderben während ihrer Aufbewahrung in der Verpackung oder eingepackt zu schaffen. Außerdem gehört zur Aufgabe der Erfindung die Schaffung einer Verpackung, eines Packmaterials und von Einlegeblättern in die Verpackung für verderbliche Produkte, vorzugsweise Lebensmittel.

Die gestellte Verfahrensaufgabe wird dadurch gelöst, dass durch kurzzeitige Behandlung der in der Berührung mit den Produkten kommenden Oberfläche der Verpackung oder des Packmaterials mit einer Lösung guanidinhaltiger, biozider Polymere mit bestimmten, molekularen Eigenschaften und im bestimmten Konzentrationsbereich das guanidinhaltige, biozide Polymer auf der Oberfläche in der Menge angesammelt wird, die zum langzeitigen Schutz der Produkte vor Verderben ausreichend ist, und im Wesentlichen nicht in das verpackte Produkt übergeht. Die in Verbindung mit der Verpackung gestellte Aufgabe wird dadurch gelöst, dass mindestens derjenige Verpackungsteil, der für die Berührung mit den eingepackten Produkten vorgesehen ist, auf dessen Oberfläche ein biozides Polymer in der Menge enthält, die eine biozide Wirkung sicherstellt, wobei dieses Polymer dabei über die Fähigkeit verfügt, im Wesentlichen nicht in die genannten Produkte überzugehen.

Es wurde vollkommen unerwartet entdeckt, dass eine Reihe von boiziden Polymeren über die Fähigkeit verfügt, sich auf der Innenfläche der Verpackung anzusammeln und in die Lebensmittel im Laufe der Haltbarkeitsdauer nicht überzugehen.

Ein vermutlicher Mechanismus dieser Ansammlung ist die Sorption des Polymers auf der Oberfläche der Verpackung. Das sich auf der Oberfläche ansammelnde, biozide Polymer gewinnt einzigartige Eigenschaften, die in sich die Eigenschaften eines Desinfektionsmittels (desinfiziert die innere Oberfläche der Verpackung) und eines Konservierungsmittels (vernichtet die mit diesem kontaktierenden Mikroorganismen, die in die Verpackung mit dem Produkt gelangt sind, ohne dabei die Innenfläche der Verpackung zu verlassen) kombinieren. Auf diese Weise wird die Qualität des Produkts unveränderlich gesichert: einerseits ist das Produkt durch das Konservierungsmittel nicht verschmutzt, und andererseits sterben die in das Produkt geratenen Mikroorganismen, ohne sich zu vermehren.

Durch Versuche ist festgestellt worden, dass guanidhaltige Polymere mit einer Molekülmasse von mindestens 2000, vorzugsweise 4000-10000 am besten der gestellten Aufgabe gerecht werden. Gerade solche Polymere verfügen über eine hohe Sorptionsfähigkeit auf der Oberfläche der Verpackung und sind für den Menschen praktisch unschädlich und für Tiere ungiftig.

Es sei darauf hingewiesen, dass Polyhexamethylenguanidin Hydrochlorid, das in der US 3860729 offenbart ist, eine Molekülmasse von 900-1300 aufweist. Unter Berücksichtigung der in der GB 702268 beschriebenen Bedingungen zur Gewinnung der Polymere von Biguanid, die in der GB 703242 verwendet werden, kann behauptet werden, dass auch die Molekülmassen dieser Polymere die genannten Werte nicht überschreiten werden. Solche Eigenschaften befriedigten vollkommen die Erfinder der erwähnten Technologie zur Entgiftung und Konservierung von Getränken.

Wie schon erwähnt wurde, ist es den Spezialisten auf dem Gebiet der Aufbewahrung von Lebensmitteln bewusst, dass sich die Verwendung jener oder anderer Konservierungsmittel unbedingt auf die geschmackliche Qualität der Produkte auswirken wird, vor allem dann, wenn es um ein kompliziertes und "launisches" Produkt wie Bier geht.

Außerdem ist es bekannt, dass, je niedriger die Molekülmasse des bioziden Polymers ist, desto höher seine Toxizität ist. Andererseits kann die Einführung von bioziden Polymeren mit einer höheren Molekülmasse in die Getränke zu einer unerwünschten Veränderung der Qualität der Getränke führen (Trübung, Bildung von Ablagerungen), und zwar infolge der Bildung von schwachlöslichen Verbindungen des bioziden Polymers mit den Komponenten der Getränke oder infolge der Koagulierung der kolloiden Komponente des Getränks.

Die Aufgabe der vorliegenden Erfindung besteht darin, die Erhaltung des Produkts zu gewährleisten, ohne dass eine wesentliche Einführung eines Konservierungsmittels in die Produktzusammensetzung stattfindet, wobei zu beachten ist, dass die bioziden Polymere über positiv geladene Gruppen und Kohlenwasserstoffketten verfügen und sie deshalb eine wesentliche Oberflächenaktivität aufweisen. Aufgrund der korporativen Wechselwirkung mit aktiven Zentren der Oberfläche setzt sich das Polymer und hält sich an der Oberfläche fest.

Mit Versuchen ist bestätigt worden, dass niedermolekulare Formen der Polymere an der Oberfläche weniger festgehalten werden und bei Kontakt mit der Flüssigkeit teilweise in diese übergehen können. Bei Erhöhung der Molekülmasse bis auf bestimmte Werte wird der Prozess der Sorption des Polymers durch die Oberfläche praktisch irreversibel.

Es ist festgestellt worden, dass im Fall der guanidinhaltigen Polymere diese Wirkung schon bei einer Molekülmasse von 2000 zu beobachten ist. Doch eine wesentliche Erhöhung der Molekülmasse ist auch unerwünscht, da sich schon bei Werten von über 10000 die Prozesse der Desorption des Polymers unter der Einwirkung der Komponenten des Getränks steigern.

Vorteilhaft ist, als guanidinhaltiges Polymer Polyhexamethylenguanidin und/oder seine Salze, insbesondere das Chlorid und/oder das Phosphat und/oder das Glukonat des Polyhexamethylenguanidin zu verwenden.

Um ein Salz von Polyhexamethylenguanidin zu gewinnen, ist es zweckmässig, zuerst Polyhexamethylenguanidin -Hydrochlorid zu gewinnen. Dazu werden Guanidinhydrochlorid und Hexamethylendiamin bei einer Temperatur vermischt, die niedriger als die Temperatur zu Beginn der Reaktion ihrer Polykondensation ist, und dann diese Mischung einem Druck auszusetzen, der niedriger als der Atmosphärendruck ist, wobei solche Betriebsarten des Drucks und der Erwärmung verwendet werden, dass die Gewinnung des Endprodukts mit einem Gehalt an Polyhexamethylenguanidin Hydrochlorid von mindestens 99,5 Massen-% gewährleistet wird, das eine Molekülmasse von mindestens 2000 aufweist und im Wesentlichen eine lineare Struktur besitzt. Bei Bedarf wird daraus durch eine Substitutionsreaktion Phosphat und/oder ein Glukonat des Polyhexamethylenguanidin..

Im Laufe von mehreren Versuchen ist es gelungen nachzuweisen, dass, wenn die Ausgangskomponenten bei einer Temperatur, die niedriger als die Temperatur zu Beginn der Polykondensationsreaktionen ist, und wenn diese Reaktion bei einem Druck, der niedriger als der Atmosphärendruck ist, durchgeführt wird, es nicht kompliziert ist, solche Betriebsarten des Drucks und der Erwärmung auszuwählen, die die Gewinnung des qualitativen Endprodukts sichern, d.h. des Produkts, das den erwähnten Eigenschaften entspricht.

Nach diesseitiger Meinung wird dadurch erreicht, dass unter diesen Bedingungen die Reaktion der Polykondensation langsam anfängt und gleichmäßig ohne Verletzung des vorgegebenen Verhältnisses zwischen den Reaktionskomponenten in vollem Umfang der Reaktionsmasse verläuft, wodurch ein besserer Verlauf der Reaktion ohne Komplikation durch parallele Nebenprozesse erzielt wird, so dass ein reines Produkt mit einer praktisch linearen Struktur gewonnen wird.

In diesem Fall gelingt es, ein stürmisches Freiwerden von Ammoniak innerhalb der ganzen Reaktionsperiode zu vermeiden. So fängt zu Beginn der Vermischung der Komponenten der Prozess der Polykondensation noch nicht an, und deshalb wird Ammoniak auch nicht freigesetzt. Nach der Erhöhung der Temperatur bis auf einen Wert, bei dem die Reaktion anfängt, kann der weitere Verlauf der Polykondensation durch Auswahl bestimmte Betriebsarten der Temperatur und des Drucks geregelt werden.

Die Geschwindigkeit der Reaktion ist tatsächlich der Temperatur direkt und dem Druck umgekehrt proportional, da, je niedriger der Druck ist, desto höher die

Abflussgeschwindigkeit von Ammoniak aus der Reaktionsmischung ist. Infolge der genauen Regelung der erwähnten Werte reagieren die Ausgangskomponenten, selbst wenn sie in unexakt äquimolaren Verhältnissen gemischt werden (der Anteil von Hexamethylendiamin kann von 1,00 bis zu 1,08 Anteilen des Guanidinhydrochlorids betragen) ohne Bildung von Nebenprodukten, so dass ein Produkt der geforderten Qualität gewonnen werden kann, das gut in Wasser lösbar ist und keine Beimischungen an wasserunlöslichem Polymer enthält.

Die Verpackung kann einen Behälter aus Glas, synthetischem Nahrungsmaterial oder Metall für Trink- oder Mineralwasser, alkoholfreie Getränke, Säfte oder Bier darstellen. Dabei kann das Material, das das biozide Polymer enthält, eine Innenschicht der Verpackung bilden.

Diese Innenschicht kann selbst wieder durch Auftragen des bioziden Polymers auf die Oberfläche einer anderen Schicht der Verpackung hergestellt werden, beispielsweise auch durch Einspritzung einer Lösung des bioziden Polymers in die Verpackung und/oder durch eine Spülung mit dieser Lösung, und/oder durch Füllung der Verpackung mit dieser Lösung und einer nachfolgenden Entleerung dieser Lösung aus der Verpackung und/oder durch die erwähnte Einspritzung mit einer nachfolgenden Evakuierung oder dem Durchblasen mit Kohlensäuregas oder einem inerten Gas oder mit einer Mischung aus diesen Gasen. Dabei kann eine Wasserlösung des Polyhexamethylenguanidin Hydrochlorids und/oder des -Phosphats, und/oder des -Glukonats mit einer Konzentration von 20-1000 mg/l, vorzugsweise 50-500mg/l, verwendet werden.

Wenn die Verpackung eine Glas- oder PET-Flasche oder eine Flasche aus einem anderen synthetischen Nahrungsmaterial für Bier ist, kann die Lösung des Polyhexamethylenguanidin Hydrochlorids und/oder -Phosphats, und/oder -Glukonats mit einer Konzentration von 50-500mg/l, vorzugsweise 150-500mg/l, verwendet werden. Wenn die Verpackung eine Glas- oder PET-Flasche oder eine Flasche aus einem anderen synthetischen Nahrungsmaterial für unvergastes Wasser ist, kann die Lösung des Polyhexamethylenguanidin Hydrochlorids und/oder -Phosphats, und/oder -

Glukonats mit einer Konzentration von 50-250mg/l verwendet werden.

Die gestellte Aufgabe wird auch dadurch gelöst, dass das Packmaterial für die verderblichen Produkte, vorzugsweise Nahrungsmittel, gemäß der Erfindung ein biozides Polymer enthält, das über die Fähigkeit verfügt, im Wesentlichen nicht in die eingepackten Produkte überzugehen. Dieses Packmaterial kann für die Herstellung der Verpackung unmittelbar vor dem Abfüllen der Produkte oder im Voraus verwendet werden.

Als biozides Polymer kann das guanidinhaltige Polymer mit einer Molekülmasse von mindestens 2000, vorzugsweise 4000-10000, zum Beispiel Polyhexamethylenguanidin und/oder dessen Salze verwendet werden, nämlich: Hydrochlorid und/oder Phosphat und/oder Glukonat. Für die Gewinnung der erwähnten Salze ist es zweckmässig, zuerst Polyhexamethylenguanidin Hydrochlorid durch Polykondensation von Guanidinhydrochlorid und Hexamethylendiamin zu gewinnen, wie es oben im Abschnitt über die Verpackung beschrieben worden ist.

Das Material kann ein flexibles, flaches Erzeugnis, beispielsweise ein Blatt oder eine

Folie sein, das geschichtet sein kann, wobei das biozide Polymer unbedingt zur Schicht des Erzeugnisses gehören soll, die für die Berührung mit den eingepackten Produkten bestimmt ist. Unabhängig davon, ob das erwähnte Material geschichtet ist, oder beispielsweise durch Imprägnierung eines Blatts mit dem bioziden Polymer hergestellt ist, kann es einen Umschlag darstellen.

Die gestellte Aufgabe wird außerdem dadurch gelöst, dass ein Einlegeblatt in die Verpackung für verderbliche Produkte, vorzugsweise Nahrungsmittel, eingelegt wird, wobei mindestens jener Teil des Einlegeblatts, der für die Berührung mit den eingepackten Produkten bestimmt ist, aus einem Material hergestellt werden soll, das das biozide Polymer enthällt, das die Fähigkeit hat, nicht in das erwähnte Produkt überzugehen.

Als biozides Polymer kann guanidinhaltiges Polymer mit einer Molekülmasse von mindestens 2000, vorzugsweise 4000-10000, insbesondere Polyhexamethylenguanidin und/oder dessen Salze, verwendet werden: Hydrochlorid und/oder Phosphat, und/oder Glukonat. Wie vorher erwähnt wurde, kann mit dem Verfahren, das im Abschnitt über die Verpackung beschrieben ist, Polyhexamethylenguanidin Hydrochlorid gewonnen werden, aus dem gegebenenfalls mit einer Substitutionsreaktion Phosphat und/oder Glukonat des Polyhexamethylenguanidin, wird.

Schließlich wird die gestellte Aufgabe noch dadurch gelöst, dass nach dem Verfahren zum Schutz von eingepackten Produkten, vorzugsweise Nahrungsmitteln, vor mikrobiellem Verderben beliebige der oben angeführten Verpackungen und/oder der Packmaterialien und/oder der Einlegeblätter in die Verpackung verwendet werden.

### Ausführungsbeispiele der Erfindung

Im Folgenden wird die Erfindung anhand von konkreten Ausführungsbeispielen näher erläutert, die jedoch den Schutzumfang der Erfindung nicht beschränken sollen.

### Gewinnung von Polyhexamethylenguanidin Hydrochlorid

In einen aus rostfreiem Stahl hergestellten Reaktor mit einer Kapazität von 200dm³, der mit einem Ankerrührer, einem Ablauf, Systemen zur Außenbeheizung und Evakuierung sowie mit einem Rückflusskühler ausgestattet ist, wird Hexamethylenguanidin (HMGA) durch eine Luke und eine dichte Rohrleitung in einer Menge zugeleitet, die dem Fassungsvermögen des Reaktors entspricht. Diese Menge wird vorher abgewogen und in einer speziellen Kammer auf eine Temperatur von 60°C erwärmt. Der Gehalt an Hauptmaterial im Rohstoff beträgt 99,5%. Ein Rückflusskühler wird angeschlossen. Das System zur Außenbeheizung des Reaktors und der Rührer werden eingeschaltet, und Guanidinhydrochlorid (GHCH) mit einem Gehalt an Hauptmaterial von,99,8% wird stufenweise in den Reaktor bis zur Bildung einer homogenen Mischung geladen. Die Menge an GHCH wird so ausgerechnet, dass das molare Verhältnis GHCH:HMGA gleich 1,0:1,02 ist.

Die Temperatur im Reaktor wird auf 110°C erhöht, wobei der Druck auf einem Niveau von 650mm Quecksilbersäule gehalten wird, ohne ein intensives Aufschäumen der Reaktionsmischung zuzulassen.

Bei der Temperatur von 110°C wird die Mischung 2,5 Stunden lang gehalten. Innerhalb dieser Zeit wird das intensive Freiwerden von Ammoniak fast beendet.

Allmählich wird die Temperatur der Mischung auf 160°C erhöht, und die Schmelze wird auf dieser Temperatur im Laufe von 4,8 Stunden gehalten. Das Freiwerden von Ammoniak wird praktisch beendet. Die Temperatur der Reaktionsmischung wird im Laufe von 15-20 Minuten auf 180°C erhöht, und dann wird sie noch 30 Minuten lang gehalten. Der Rückflusskühler wird abgeschaltet, und der Druck im Reaktor wird auf 360mm Quecksilbersäule abgesenkt. Die Schmelze wird während einer Stunde intensiv umgerührt. Über den Ablauf wird die Polymerschmelze (deren Schichtdicke 2-3cm beträgt) in eine Auffangpfanne aus rostfreiem Stahl abgegossen. Nach der Abkühlung wird die durchsichtige, glasartige Masse des Polymers zerkleinert und dicht in Polyäthylensäcke eingepackt.

Wie schon erwähnt wurde, wird bei einem Verhältnis des GHCH zu HMGA von 1,0 (1,00-1,08) ein in Wasser gut lösliches Polyhexamethylenguanidin Hydrochlorid

(PHMG-HC) gewonnen, das keine Beimischungen an wasserunlöslichem Polymer enthält.

Die Konzentration der Beimischung des HMGA überschreitet 0,09% nicht. Daher hat das Produkt eine niedrige Toxizität. Die relative Viskosität (5%ige Lösung von PHMG-HC in einer 3%igen Lösung von Natriumchlorid) beträgt 0,08-0,15dl/g und zeugt davon, dass niedermolekulare Fraktionen praktisch abwesend sind, die die biozide Aktivität des Polymers herabsetzen und dessen Toxizität erhöhen würden. Dabei beträgt die Molekülmasse des Polymers 2000-12000.

### Vorbereitung der Wasserlösungen von Polyhexamethylenguanidin -Salzen

Aus Polyhexamethylenguanidin Hydrochlorid kann mittels der Subsitutionsreaktion ein beliebiges Salz des Polyhexamethylenguanidin leicht vorbereitet werden.

Gewöhnlich wird eine konzentrierte Lösung der PHMG-Salze (10-30%) vorbereitet, die ihre physisch-chemischen und bioziden Eigenschaften ohne Veränderung mindestens 5 Jahre lang behält. Dazu wird eine genaue Einwaage des gekörnten oder zerstückelten Präparats des Chlorids, Phosphats oder PHMG-Glukonats oder beliebige Mischungen dieser Salze in einen Behälter aus einem inerten Material und eine entsprechende Menge von vorher auf eine Temperatur von 40-70°C aufgewärmten Trink-, enthärteten oder salzfreien Wasser hinzugefügt.

Die Verwendung der PHMG-Salze wird aufgrund ihrer höheren Lösbarkeit in Wasser im Vergleich zu einer Base bevorzugt. Die Mischungen werden bis zur vollen Auflösung des Polymers umgerührt. Die gewonnene Lösung wird für die Zubereitung von Arbeitslösungen der PHMG-Salze durch Auflösen in Wasser bis zur vorgegebenen Konzentration verwendet.

### Herstellung der Verpackungen, Packmaterialien oder Einlegeblätter in die Verpackung

Unter dem Begriff "Verpackung" soll sowohl das Endergebnis der Verpackungsoperationen (zum Beispiel die Behälter mit den eingepackten Gegenständen) als auch der Behälter selbst verstanden werden, insbesondere, wenn dieser nicht im Laufe der Verpackungsoperationen, sondern vorher hergestellt worden ist. Unter dem Begriff "Packmaterial" soll das Material verstanden werden, vorzugsweise in Form von Blättern, Bändern, Rollen oder ähnlichen flachen Erzeugnissen, aus dem im Laufe der Verpackung die Behälter oder die Fertigwaren (die eingepackten Produkte) hergestellt werden. Dies schließt aber die Möglichkeit einer vorherigen Herstellung der Behälter einer beliebigen Konfiguration aus den Packmaterialien nicht aus.

Wenn als Verpackung eine Flasche verwendet wird, kann folgende Technologie der Herstellung der Verpackungen zum Einsatz kommen. Die vorher ausgewaschenen Glasflaschen oder die Flaschen aus synthetischen Nahrungsmaterialien, zum Beispiel aus Polyterephthalsäureglykolester (PET-Flaschen), aus Polykarbonat (PK-Flaschen) oder aus Polypropylen (PP-Flaschen), die mit einem Automat zum Blasen der Flaschen hergestellt sind, werden mit einer Arbeitslösung, die einen Gehalt eines der PHMG-Salze oder ihrer Mischung von 20-1000mg/l aufweist, für die Bildung einer feinen Schicht des erwähnten bioziden Polymers auf der Innenfläche der Flaschen bearbeitet.

Auf der Bearbeitungsstraße zum Abfüllen der Getränke erfolgt eine solche Bearbeitung durch Injektion der Arbeitslösung der PHMG-Salze unter Druck in die umgedrehte Flasche oder durch Spülung der Flasche mit einem Arbeitslösungsstrahl, durch nachfolgendes Zurückdrehen der Flasche, durch Füllung mit dem Getränk und Verschließen der Flasche mit einer Kappe auf einem Abfüll- und Verschließautomat. Die modernen Bearbeitungsstraßen zum Abfüllen von Getränken können auch mit einer Einrichtung zur Entfernung von Resten der PHMG-Arbeitslösung aus den Flaschen, beispielsweise durch Evakuierung oder durch Zuleitung von Pressluft oder eines inerten Gases in die Flasche zwecks Entfernung der Reste der Spüllösung, ausgestattet sein.

Die Bearbeitung der Flaschen kann auch durch ihr Auffüllen mit der Arbeitslösung der PHMG-Salze mit nachfolgendem Ausgießen der Arbeitslösung, dem Aufschütteln der Flasche oder der Bearbeitung mit einem Pressluftstrom, Kohlensäuregas oder einem inerten Gas für die Entfernung des Arbeitslösungsrests durchgeführt werden. Die bearbeiteten Flaschen werden auf ein Fließband gebracht, das sie in den Abfüll- und Verschließautomaten befördert.

Auf ähnliche Weise können die Verpackungen oder das Packmaterial für die

Aufbewahrung von Lebensmitteln bearbeitet werden, wenn die Produkte nicht unmittelbar nach der Herstellung der Verpackung, sondern nach einiger Zeit eingepackt werden. Dies betrifft sowohl Flaschen aus verschiedenen Materialien, als auch Pappe oder Papier, die mit Polymermaterialien, Folie usw. modifiziert sind, aus denen dann die Verpackungen für flüssige und feste Lebensmittel (beispielsweise Tetrapaks, Packfolien für Käse, Wurst, Brot, Süßwaren, Gemüse, Früchte usw.) hergestellt werden.

Die Haltbarkeit der Getränke im Behälter, der mit Lösungen der PHMG-Salze bearbeitet ist, wurde optisch nach den organoleptischen (GOST 30060 und GOST 3351) und mikrobiologischen Kenndaten kontrolliert: die Bakterien der Darmbazillus-Gruppe (GOST 30518) und die Gesamtmenge der Mikroorganismen (GOST 18963-73).

Der Behälter aus Glas, synthetischem Material, Pappe, Papier, Holz oder Keramik, der mit den Verfahren der Benetzung, der Zerstäubung, des Auswaschens oder der Befüllung mit einer 0,001-5,0%igen Lösung des Chlorids oder des PHMG-Phosphats bearbeitet wurden, entsprach allen Forderungen an die Verpackungsmaterialien der Nahrungsbestimmung nach den Kenndaten der mikrobiologischen Kontrolle: die allgemeine mikrobiologische Aussaat, das Vorhandensein von Bakterien der Darmbazillus-Gruppe und der pathogenen Mikroorganismen. Im Laufe der ganzen Beobachtungszeit (6 Monate) fehlten pathogene Mikroorganismen und Bakterien der Darmbazillus-Gruppe auf der Oberfläche des Behälters, der mit den Lösungen der PHMG-Salze bearbeitet wurde. Die Gesamtzahl der Mikroben überschritt nicht 0-3 KOE auf 1 dm² der Oberfläche.

Ähnliche Wirkungen wurden bei der Aufbewahrung anderer Lebensmittel in Verpackungen beobachtet, die zuerst mit den Verfahren der Benetzung, der Zerstäubung oder des Auswaschens mit einer 0,001-5,0%igen Lösung des Chlorids oder des PHMG-Phosphats bearbeitet worden sind.

Brotwaren (Weiß- und Schwarzbrot), die in eine synthetische Folie eingepackt waren, die mit einer 0,05-0,01 %igen Lösung eines der erwähnten Salze bearbeitet waren, verschimmelten im Laufe von 6-8 Tagen der Aufbewahrung nicht, wobei fremde Gerüche fehlten.

Fester Käse und Wurst, die beide in eine mit einer 0,1 %ige Lösung des Chlorids oder des PHMG-Phosphats bearbeitete Folie eingepackt waren, behielten ihre geschmackliche Qualität und verschimmelten nicht im Laufe einer Aufbewahrungzeit von zwei Monaten im Kühlschrank. Die Kontrollmuster von Käse und Wurst, die in die mit den PHMG-Salzen nicht verarbeitete Folie eingepackt waren, verschimmelten und verloren ihre geschmackliche Qualität schon nach 8-10 Tagen.

Äpfel, Möhren und Paprika, die in Papierpakete eingepackt waren, die mit der 0,1-0,5%igen Lösung der PHMG-Salze behandelt waren, behielten ihre Qualität im Laufe der ganzen Beobachtungszeit (60 Tage). Die Kontrollmuster waren schon nach 20 Tagen von Schimmel befallen.

Sehr gute Ergebnisse wurden bei der Verwendung von mit PHMG-Salzen bearbeiteten Einlegeblättern in unbearbeiteten Verpackungen erreicht. Die Einlegeblätter können die Form eines flachen Erzeugnisses, einer Kugel oder eine andere Form aufweisen. Es ist offensichtlich, dass vorzugsweise die Verwendung von Einlegeblättern mit der entwickelten Oberfläche die Wirksamkeit der Frischhaltung erhöht. Die Haltbarkeit der Produkte wird gleichzeitig mit der Verwendung der Einlegeblätter und der Verpackungen erhöht, die mit den Salzen von PHMG und anderen bioziden Polymeren bearbeitet sind.

Es darf auch nicht vergessen werden, dass sich die oben beschriebene Technologie nicht nur auf Lebensmittel erstreckt: ein beliebiges Erzeugnis oder das Material, das für das mikrobielle Verderben anfällig ist, wird bedeutend besser bei Verwendung der Verpackungen, Packmaterialien und Einlegeblätter aufbewahrt, die die bioziden Polymere enthalten, besonders guanidinhaltige Polymere, die eine Molekülmasse von mindestens 2000 aufweisen. Beispielsweise wird die Haltbarkeitsdauer von medizinischen, sterilen Materialien und Erzeugnissen, von hygienischen (Watte, Binde usw.) und kosmetischen (Cremes, Shampoos, Seife usw.) Waren, von Film- und Fotomaterialien, von Museumsstücken und sogar von Erdölprodukten wesentlich erhöht.

Im Folgenden sind Varianten der konkreten Verwirklichung der Erfindung am Beispiel der Vorbereitung von Behältern zum Abfüllen von Trinkwasser und Bier angeführt.

### Beispiel 1

In den Tank für die Zuleitung der entseuchenden Lösung in das automatische System zum Spülen der Behälter auf der Abfülllinie für unvergastes Trinkwasser in 51-PET-Flaschen werden 1000I Arbeitslösung mit einer Konzentration an PHMG-Chlorid von 100mg/l eingefüllt. Das Spülen der Behälter erfolgt durch Einspritzen der Arbeitslösung in den umgedrehten Behälter (Flasche), wonach die Flaschen mit einem Transporter in einen Abfüll- und Verschließautomaten befördert werden, in dem sie mit Trinkwasser gefüllt und mit Gewindekappen verschlossen werden.

Zur Kontrolle werden 40 Flaschen aussortiert, die mit Wasser nach ihrem Abspülen mit der Lösung des PHMG-Chlorids befüllt sind, und 10 Flaschen Wasser ohne ein vorheriges Abspülen mit der Lösung des PHMG-Chlorids genommen. Die Qualität des Wassers wird periodisch nach den organoleptischen und mikrobiologischen Kenndaten überwacht. Ähnliche Untersuchungen wurden auch bei Verwendung von Arbeitslösungen mit einem unterschiedlichen Gehalt an Chlorid, Phosphat und PHMG-Glukonat durchgeführt. Als Verpackung wurden Glas- und PET-Flaschen verwendet. Die erzielten Ergebnisse sind in der folgenden Tabelle 1 zusammengefasst.

**Tabelle 1**

| Bezeichnung des PHMG-Salzes | Konzentration der PHMG-Salze in der Lösung, mg/l | Flaschen-material | Anzahl der Mikroorganismen, KOE /cm³ | | | |
|---|---|---|---|---|---|---|
| | | | Nach 1 Stunde | Nach 1 Tag | Nach 3 Monaten | Nach 6 Monaten |
| Chlorid PHMG | 20 | PET | 12 | 4 | 0 | 1 |
| Kontrolle | 0 | PET | 16 | 28 | Ununterbroch. Wachstum | Ununterbroch. Wachstum |
| Chlorid PHMG | 50 | PET | 10 | 3 | 0 | 0 |
| Kontrolle | 0 | PET | 18 | 31 | Ununterbroch. Wachstum | Ununterbroch. Wachstum |
| Chlorid PHMG | 100 | PET | 21 | 6 | 0 | 1 |
| Kontrolle | 0 | PET | 36 | 74 | Ununterbroch. Wachstum | Ununterbroch. Wachstum |
| Chlorid PHMG | 150 | PET | 18 | 2 | 0 | r" 0 |
| Kontrolle | 0 | PET | 42 | 106 | Ununterbroch. Wachstum | Ununterbroch. Wachstum |
| Chlorid PHMG | 200 | PET | 12 | 0 | 0 | 0 |
| Kontrolle | 0 | PET | 58 | 143 | Ununterbroch. Wachstum | Ununterbroch. Wachstum |
| Chlorid PHMG | 250 | PET | 7 | | 0 | 0 |
| Kontrolle | 0 | PET | 43 | 121 | Ununterbroch. Wachstum | Ununterbroch. Wachstum |
| Phosphat PHMG | 75 | PET | 6 | 2 | 0 | 0 |
| Kontrolle | 0 | PET | 14 | 31 | Ununterbroch. Wachstum | Ununterbroch. Wachstum |
| Phosphat PHMG | 100 | PET | 11 | 1 | 0 | 0 |
| Kontrolle | 0 | PET | 27 | 38 | Ununterbroch. Wachstum | Ununterbroch. Wachstum |
| Phosphat PHMG | 150 | PET | 8 | 1 | 0 | 0 |
| Kontrolle | 0 | PET | 39 | 56 | Ununterbroch. Wachstum | Ununterbroch. Wachstum |
| Glukonat PHMG | 100 | PET | 11 | 2 | 0 | 0 |
| Kontrolle | 0 | PET | 34 | 59 | Ununterbroch. Wachstum | Ununterbroch. Wachstum |
| Glukonat PHMG | 150 | PET | 9 | 1 | 0 | 0 |
| Kontrolle | 0 | PET | 29 | 39 | Ununterbroch. Wachstum | Ununterbroch. Wachstum |
| Chlorid PHMG Phosphat PHMG | 20 80 | PET | 12 | 2 | 0 | 0 |
| Kontrolle | 0 | PET | 23 | 44 | Ununterbroch. Wachstum | Ununterbroch. Wachstum |
| Chlorid PHMG Phosphat PHMG | 90 10 | PET | 6 | 2 | 0 | 0 |
| Kontrolle | 0 | PET | 28 | 48 | Ununterbroch. Wachstum | Ununterbroch. Wachstum |
| Chlorid PHMG Glukonat PHMG | 80 20 | PET | 9 | 1 | 0 | 0 |
| Kontrolle | 0 | PET | 24 | 41 | Ununterbroch. Wachstum | Ununterbroch. Wachstum |
| Phosphat PHMG Glukonat PHMG | 40 60 | PET | 7 | 1 | 0 | 0 |
| Kontrolle | 0 | PET | 21 | 35 | Ununterbroch. Wachstum | Ununterbroch. Wachstum |
| Chlorid PHMG | 75 | Glas | 8 | 0 | 0 | 0 |
| Kontrolle | 0 | Glas | 18 | 51 | Ununterbroch. Wachstum | Ununterbroch. Wachstum |
| Phosphat PHMG | 100 | Glas | 8 | 1 | 0 | 0 |
| Kontrolle | 0 | Glas | 23 | 39 | Ununterbroch. Wachstum | Ununterbroch. Wachstum |
| Glukonat PHMG | 100 | Glas | 6 | 1 | 0 | 0 |
| Kontrolle | 0 | Glas | 16 | 28 | Ununterbroch. Wachstum | Ununterbroch. Wachstum |

| | | | | | | |
|---|---|---|---|---|---|---|
| Anmerkung: 1. Kontrolle: der Behälter wurde mit der Arbeitslösung der PHMG-Salze nicht verarbeitet. 2. Normativ für die Anzahl der Mikroorganismen: nicht mehr als 100 KOE in 1 ml Wasser. 3. Die Anzahl der Bakterien der Darmbazillus-Gruppe in allen Versuchen war geringer als 3 KOE in 1I Wasser. | | | | | | |

Die Tabellenangaben zeugen davon, dass unabhängig von den PHMG-Salzformen und deren Konzentration in der Arbeitslösung die Wasserqualität bei der Wasseraufbewahrung in den mit dem oben genannten Verfahren bearbeiteten Flaschen unvergleichlich höher ist, als wenn diese Bearbeitung nicht durchgeführt wurde.

Wenn auch die Flaschen vorher mit starken Desinfektionsmitteln, wie Chlor, Wasserstoffperoxid, Ozon, UV-Bestrahlung bearbeitet wurden, war die Wasserqualität schlechter, weil diese Desinfektionsmittel keine lange Wirkung haben. Beim Abfüllen und Verschließen der Flaschen ist es praktisch unmöglich, die mikrobiologische Verschmutzung von Wasser zu verhindern.

### Beispiel 2

Glasflaschen mit 0,51 Inhalt werden nach dem Waschen mit einer Lösung befüllt, die ein Gehalt an PHMG-Chlorid von 250mg/l aufweist. Nach 1-2s wird die Lösung abgegossen. Die Flaschen werden mit steriler Heißluft zur Entfernung der Reste des Desinfektionsmittels durchgeblasen. Die Flaschen werden auf ein Fließband gebracht, mit dem sie in einen Abfüll- und Verschließautomaten befördert werden. Nachdem 50 Flaschen mit hellem, gefilterten Bier abgefüllt wurden, die vorher mit der genannten Lösung bearbeitet worden waren, bleiben 10 Flaschen Bier ohne Bearbeitung zur Aufbewahrung, um die Haltbarkeit gemäß der Methodik DSTU 3888-99 zu bestimmen.

Ähnlich wie im vorgenannten Beispiel sind auch Untersuchungen mit unterschiedlichen Konzentrationen von Chlorid, Phosphat und PHMG-Glukonat in den Arbeitslösungen vorgenommen worden. In den Versuchen wurde helles, filtriertes, nicht pasteurisiertes Bier und pasteurisiertes Bier verwendet. Das Bier wurde in Glas- und PET-Flaschen abgefüllt. Die Ergebnisse sind in der folgenden Tabelle 2 dargestellt.

**Tabelle 2**

| Bezeichnung des PHMG-Salzes | Konzentration der PHMG-Salze in der Lösung, mg/l | Flaschen-. material | Biersorte | Haltbarkeit, Tage | | |
|---|---|---|---|---|---|---|
| | | | | Im verarbeit. Behältern | Im nicht verarbeit. Behälter | DSTU-Anforderungen 3888-99 |
| Chlorid PHMG | 100 | Glas | pasteurisiert | >90 | 46 | 30 |
| Chlorid PHMG | 250 | Glas | pasteurisiert | >90 | 39 | 30 |
| Chlorid PHMG | 500 | Glas | pasteurisiert | >90 | 45 | 30 |
| Phosphat PHMG | 125 | Glas | pasteurisiert | >90 | 45 | 30 |
| Phosphat PHMG | 250 | Glas | pasteurisiert | >90 | 48 | 30 |
| Phosphat PHMG | 400 | Glas | pasteurisiert | >90 | 47 | 30 |
| Glukonat PHMG | 140 | Glas | pasteurisiert | >90 | 42 | 30 |
| Glukonat PHMG | 250 | Glas | pasteurisiert | >90 | 40 | 30 |
| Chlorid PHMG | 125 | Glas | pasteurisiert | >90 | 49 | 30 |
| Phosphat PHMG | 125 | | | | | |
| Chlorid PHMG | 200 | Glas | pasteurisiert | >90 | 45 | 30 |
| Phosphat PHMG | 50 | | | | | |
| Chlorid PHMG | 50 | Glas | pasteurisiert | >90" | 46 | 30 |
| Phosphat PHMG | 200 | | | | | |
| Chlorid PHMG | 150 | Glas | pasteurisiert | >90 | 44 | 30 |
| Phosphat PHMG | 50 | | | | | |
| Glukonat PHMG | 50 | | | | | |
| Chlorid PHMG | 75 | Glas | pasteurisiert | >90 | 47 | 30 |
| Phosphat PHMG | 100 | | | | | |
| Glukonat PHMG | 50 | | | | | |
| Chlorid PHMG | 200 | PET | pasteurisiert | >90 | 38 | 30 |
| Phosphat PHMG | 220 | PET | pasteurisiert | >90 | 34 | 30 |
| Glukonat PHMG | 240 | PET | pasteurisiert | >90 | 36 | 30 |
| Chlorid PHMG | 125 | Glas | nicht pasteurisiert. | 22 | 6 | 7 |
| Chlorid PHMG | 250 | Glas | nicht pasteurisiert | 31 | 7 | "7 |
| Phosphat PHMG | 150 | Glas | nicht pasteurisiert | 27 | 8 | 7 |
| Phosphat PHMG | 300 | Glas | nicht pasteurisiert | 36 | 7 | 7 |
| Chlorid PHMG | 125 | Glas | nicht | 34 | 8 | 7 |
| Phosphat PHMG | 125 | | pasteurisiert | | | |
| Chlorid PHMG Glukonat PHMG | 125 100 | Glas | nicht pasteurisiert | 32 | 8 | 7 |
| Chlorid PHMG | 200 | PET | nicht pasteurisiert | 31 | 8 | 7 |
| Chlorid PHMG | 250 | PET | nicht pasteurisiert | 36 | 8 | 7 |

Wie aus den Tabellenangaben erkennbar ist, beträgt die Haltbarkeit des filtrierten, nicht pasteurisierten Biers in den Flaschen, die nicht mit der Lösung des bioziden Polymers bearbeitet wurden, 6-8 Tage. Gleichzeitig hat die vorhergehende Bearbeitung der Flaschen mit den Lösungen der PHMG-Salze erlaubt, die Haltbarkeit des nicht pasteurisierten Biers auf 28-36 Tage zu verlängern. Im Falle des pasteurisierten Biers hat sich dessen Haltbarkeit als Ergebnis der Bearbeitung der Flaschen mit den Lösungen der PHMG-Salze um das 1,9- bis 2,9-Fache unter Berücksichtigung der Tatsache, dass der Versuch nach 90 Tagen beendet wurde, erhöht.

Es sei darauf hingewiesen, dass durch die vorgenommenen Versuche die Fähigkeit der PHMG-Verbindungen bestätigt wurde, sich auf der Innenfläche der Verpackung zu sammeln und nicht in die Lebensmittel im Laufe ihrer Aufbewahrungszeit überzugehen.

Steigbrunnenwasser mit einer Konzentration des PHMG-Chlorids von 0,3mg/l, 0,5mg/l und 1,0mg/l wurde in 21-PET-Flaschen und in 0,5I-Glasflaschen abgefüllt. Der Gehalt an PHMG-Chlorid wurde in bestimmten Zeiträumen (Tabelle 3) überwacht.

**Tabelle 3**

| Konzentration von PHMG Chlorid im Ausgangssteigbrunnenwasser, mg/l | Konzentration von PHMG Chlorid im abgefüllten Wasser, mg/l | | | | |
|---|---|---|---|---|---|
| | Nach 3 Stunden | Nach 24 Stunden | Nach 72 Stunden | Nach 30 Tagen | Nach 6 Monaten |
| Flaschen aus Polyterephthalsäureglykolester | | | | | |
| 0,3 | nicht festgestellt | nicht festgestellt | nicht festgestellt | nicht festgestellt | nicht festgestellt |
| 0,5 | 0,12 | nicht festgestellt | nicht festgestellt | nicht festgestellt | nicht festgestellt |
| 1,0 | 0,57 | 0,48 | 0,48 | 0,41 | 0,36 |

| Glasflaschen | | | | | |
|---|---|---|---|---|---|
| 0,3 | nicht festgestellt | nicht festgestellt | nicht festgestellt | nicht festgestellt | nicht festgestellt |
| 0,5 | 0,16 | 0,10 | nicht festgestellt | nicht festgestellt | nicht festgestellt |
| 1,0 | 0,62 | 0,56 | 0,52 | 0,46 | 0,38 |

Wie aus den Tabellenangaben erkennbar ist, verringerte sich die Konzentration von PHMG-Chlorid in der Lösung aufgrund seiner Ansammlung auf der Innenfläche der Flaschen, da die PHMG-Verbindungen chemisch beständig sind und ihre Lösungen ohne Veränderung der Konzentrationen längere Zeit aufbewahrt werden können (siehe zum Beispiel, O.J. Kuznetzov, N.I. Danilina. "Reinigung und Entgiftung des Wassers mit bakterizidem Polyelektrolyt", Die Wasserversorgung und die Sanitätstechnik, 2000, S. 10).

Sogar bei langzeitiger Aufbewahrung des dicht verschlossenen Wassers war der Eintritt von PHMG-Chlorid von der Innenfläche der Flaschen in das Wasser nicht zu beobachten. Ähnliche Ergebnisse sind auch bei der Verwendung von PHMG-Phosphat und -Glukonat erreicht worden. Außerdem haben Testreaktionen mit Eosin-H das Vorhandensein von PHMG-Salzen auf der Innenfläche der PET- und Glasflaschen sogar nach dem Spülen mit salzfreiem Wasser gezeigt.

Es sei darauf hingewiesen, dass bei niedrigen Konzentrationen der PHMG-Salze in den Arbeitslösungen (0,3-1,0mg/l) der Prozess der Bildung der bioziden Schicht auf der Oberfläche der Flaschen langsam verläuft. Auf den Abfüllstraßen für Mineralwasser, Bier, Säfte oder alkoholfreie Getränke wird die Zeit der Bearbeitung der Verpackung mit der Lösung der PHMG-Salze in Sekunden oder in Bruchteilen von Sekunden gemessen.

Durch Versuche ist festgestellt worden, dass für die Ansammlung der notwendigen Menge an PHMG-Salzen auf der Innenfläche der Verpackung in solch kurzer Zeit die Konzentration von 20 bis zu 1000mg/l wirksam ist. Unter solchen Bedingungen kann die Abwesenheit der PHMG-Salze in den Getränken (Tabelle 4) garantiert werden. Als Beispiel sind in der folgenden Tabelle 4 Angaben über den Gehalt an PHMG-Chlorid im abgefüllten Wasser je nach Konzentration des Chlorids in der Arbeitslösung angeführt.

**Tabelle 4**

| Konzentration von PHMG-Chlorid in der Arbeitslösung mg/l | Restkonzentration von PHMG-Chlorid im abgefüllten Wasser mg/l | | | | | |
|---|---|---|---|---|---|---|
| | Nach 0,5 Stunden | Nach 3 Stunden | Nach 24 Stunden | Nach 72 Stunden | Nach 3 Monaten | Nach 6 Monaten |
| 10 | nicht festgestellt | nicht festgestellt | nicht festgestellt | nicht festgestellt | nicht festgestellt | nicht festgestellt |
| 20 | nicht festgestellt | nicht festgestellt | nicht festgestellt | nicht festgestellt | nicht festgestellt | nicht festgestellt |
| 50 | nicht festgestellt | nicht festgestellt | nicht festgestellt | nicht festgestellt | nicht festgestellt | nicht festgestellt |
| 75 | 0,10 | nicht festgestellt | nicht festgestellt | nicht festgestellt | nicht festgestellt | nicht festgestellt |
| 100 | 0,12 | nicht festgestellt | nicht festgestellt | nicht festgestellt | nicht festgestellt | nicht festgestellt |
| 120 | 0,15 | 0,10 | nicht festgestellt | nicht festgestellt | nicht festgestellt | nicht festgestellt |
| 150 | 0,17 | 0,11 | nicht festgestellt | nicht festgestellt | nicht festgestellt | nicht festgestellt |
| 175 | 0,19 | OÄ4 | nicht festgestellt | nicht festgestellt | nicht festgestellt | nicht festgestellt |
| 200 | 0,23 | 0,19 | 0,12 | nicht festgestellt | nicht festgestellt | nicht festgestellt |
| 250 | 0,32 | 0,24 | 0,21 | 0,14 | nicht festgestellt | nicht festgestellt |

Aus der Tabelle ist zu erkennen, dass bei der Konzentration des PHMG-Chlorids von 10-100mg/l nach drei Stunden, bei der Konzentration des PHMG-Chlorids von nicht mehr als 175mg/l nach 24 Stunden und bei der Konzentration von nicht mehr 200mg/l nach 72 Stunden im Wasser PHMG-Chlorid praktisch fehlt. Ähnliche Ergebnisse wie in der Tabelle 4 wurden auch bei Verwendung von Lösungen des PHMG-Phosphats und des PHMG-Glukonats für das Spülen der Flaschen vor dem Abfüllen des Wassers erreicht.

Durch Versuche wurde festgestellt, dass unter der Bedingung einer sorgfältigen Entfernung des Rests der Arbeitslösungen der PHMG-Salze nach der Bearbeitung der Verpackung, zum Beispiel durch Zuleitung von Druckluft oder inerten Gasen in die Flasche, die erwähnten Salze in den Getränken und im Wasser schon nach 3 Stunden nach dem Abfüllen, sogar bei einem Gehalt an Arbeitslösungen von 500mg/l, praktisch fehlten.

Außerdem wurde festgestellt, dass das Spülen der Flaschen aus Glas und synthetischen Nahrungsmaterialien mit Lösungen des PHMG-Chlorids, -Phosphats oder -Glukonats mit einer Konzentration von nicht mehr als 500mg/l die geschmackliche Qualität und das Aussehen des Getränks nicht beeinflusst; es wird nur die Behandlungszeit verlängert.

Es sei auch darauf hingewiesen, dass bei der Aufmachung der Flaschen, die vorher mit den erwähnten PHMG-Verbindungen bearbeitet worden sind, das Wasser im Laufe von 16-18 Tagen und das Bier im Laufe von 2-3 Tagen nicht infiziert wurde, was auch als Beweis des Vorhandenseins der bioziden Wirkung der PHMG-Salze dient, die sich auf der Innenfläche der Flaschen ansammeln und im Getränk, wie gezeigt worden ist, fehlen.

## Patentansprüche

1. Verfahren zum Schutz von Produkten, vorzugsweise Nahrungsmitteln, vor mikrobiellem Verderben während ihrer Aufbewahrung in der Verpackung oder eingepackt,
**dadurch gekennzeichnet,**
**dass** durch kurzzeitige Behandlung der in der Berührung mit den Produkten kommenden Oberfläche der Verpackung oder des Packmaterials mit einer Lösung guanidinhaltiger, biozider Polymere mit bestimmten, molekularen Eigenschaften und im bestimmten Konzentrationsbereich das guanidinhaltige, biozide Polymer auf der Oberfläche in der Menge angesammelt wird, die zum langzeitigen Schutz der Produkte vor Verderben ausreichend ist, und im Wesentlichen nicht in das verpackte Produkt übergeht.

2. Verpackung für verderbliche Produkte, vorzugsweise Lebensmittel,
**dadurch gekennzeichnet,**
**dass** mindestens derjenige Verpackungsteil, der für die Berührung mit den eingepackten Produkten vorgesehen ist, auf dessen Oberfläche ein biozides Polymer in der Menge enthält, die eine biozide Wirkung sicherstellt, wobei dieses Polymer dabei über die Fähigkeit verfügt, im Wesentlichen nicht in die genannten Produkte überzugehen.

3. Verpackung nach Anspruch 2,
**dadurch gekennzeichnet,**
**dass** als biozides Polymer guanidinhaltiges Polymer mit Molekülmasse von mindestens 2000, vorzugsweise 4000-10000, verwendet wird.

4. Verpackung nach Anspruch 3,
**dadurch gekennzeichnet,**
**dass** als guanidinhaltiges Polymer Polyhexamethylenguanidin und/oder dessen Salze verwendet wird bzw. werden.

5. Verpackung nach Anspruch 4,
**dadurch gekennzeichnet,**
**dass** als Polyhexamethylenguanidin-Salz Hydrochlorid und/oder Phosphat und/oder Glukonat verwendet wird.

6. Verpackung nach Anspruch 5,
**dadurch gekennzeichnet,**
**dass** bei der Gewinnung des zu deren Behandlung verwendeten, bioziden Polymers mit den gewünschten Eigenschaften vorher Polyhexamethylenguanidin-Hydrochlorid gewonnen wird, wobei Guanidinhydrochlorid und Hexamethylendiamin bei einer Temperatur gemischt werden, die niedriger als die Temperatur zu Beginn der Polykondensationsreaktion ist, wobei die erwähnte Reaktion unter einem Druck erfolgt, der niedriger als der Atmosphärendruck ist, und wobei solche Betriebsarten des Drucks und des Erwärmens eingesetzt werden, dass das gewonnene Endprodukt einen Gehalt an Polyhexamethylenguanidin-Hydrochlorid von mindestens 99,5 Gew.% und ein Molekülgewicht von mindestens 2000 aufweist und im Wesentlichen eine lineare Struktur besitzt, und dass daraus bei Bedarf durch eine Substitutionsreaktion Polyhexamethylenguanidin-Phosphat und/oder -Glukonat gewonnen wird.

7. Verpackung nach einem der Ansprüche 2 bis 6,
**dadurch gekennzeichnet,**
**dass** sie einen Behälter aus Glas, synthetischen Nahrungsmaterialien oder Metall für Trink- oder Mineralwasser, alkoholfreie Getränke, Säfte oder Bier darstellt.

8. Verpackung nach einem der Ansprüche 2 bis 7,
**dadurch gekennzeichnet,**
**dass** das Material, das das biozide Polymer auf der Oberfläche enthält, eine innenschicht der Verpackung bildet.

9. Verpackung nach dem Anspruch 8,
**dadurch gekennzeichnet,**
**dass** deren Innenschicht durch Injektion einer Lösung mit benötigter Konzentration des bioziden Polymers in die Verpackung und/oder durch Spülung mit der gleichen Lösung und/oder durch Füllung mit nachfolgendem Ausgießen der Lösung und/oder durch die erwähnte Injektion mit nachfolgender Evakuierung oder nachfolgendem Durchblasen mit Kohlensäuregas oder einem inerten Gas oder mit deren Mischung gebildet wird.

10. Verpackung nach den Ansprüchen 7 bis 9,
**dadurch gekennzeichnet,**
**dass** zur Bildung der Innenschicht die Wasserlösung Polyhexamethylenguanidin-Hydrochlorid und/oder -Phosphat und/oder -Glikonat im Konzentrationsbereich von 20-1000 mg/l, vorzugsweise 50-500 mg/l, enthält.

11. Verpackung nach den Ansprüchen 7 bis 10,
**dadurch gekennzeichnet,**
**dass** sie eine Glas- oder PET-Flasche oder eine Flasche aus einem anderen synthetischen Nahrungsmaterial für Bier darstellt, wobei zur Bildung der Innenschicht die Wasserlösung des Polyhexamethylenguanidin-Hydrochlorids und/oder -Phosphats, und/oder -Glikonats im Konzentrationsbereich von 50-500 mg/l, vorzugsweise 150-500 mg/l, verwendet wird.

12. Verpackung nach den Ansprüchen 8 bis 10,
**dadurch gekennzeichnet,**
**dass** sie eine Glas- oder PET-Flasche oder eine Flasche aus einem anderen synthetischen Nahrungsmaterial für unvergastes Wasser darstellt, wobei zur Bildung der Innenschicht die Wasserlösung des Polyhexamethylenguanidin-Hydrochlorids und/oder -Phosphats, und/oder -Glikonats im Konzentrationsbereich von 50- 250 mg/l, verwendet wird.

13. Verpackungsmaterial für verderbliche Produkte, vorzugsweise Lebensmittel, **dadurch gekennzeichnet,**
**dass** die Oberfläche, die für die Berührung mit dem Produkt vorgesehen ist, ein biozides Polymer in der Menge enthält, die eine biozide Wirkung sicherstellt, wobei es über die Fähigkeit verfügt, im Wesentlichen nicht in die Produkte überzugehen.

14. Verpackungsmaterial nach Anspruch 13,
**dadurch gekennzeichnet,**
**dass** als biozides Polymer guanidinhaltiges Polymer mit einer Molekülmasse von mindestens 2000, vorzugsweise 4000-10000, verwendet wird.

15. Verpackungsmaterial nach Anspruch 14,
**dadurch gekennzeichnet,**
**dass** als guanidinhaltiges Polymer Polyhexamethylenguanidin und/oder dessen Salze verwendet wird bzw. werden.

16. Verpackungsmaterial nach Anspruch 15,
**dadurch gekennzeichnet,**
**dass** als Polyhexamethylenguanidin-Salz Hydrochlorid und/oder Phosphat und/oder Glukonat verwendet wird.

17. Verpackungsmaterial nach Anspruch 16,
**dadurch gekennzeichnet,**
**dass** vorher zur Gewinnung von Polyhexamethylenguanidin-Salzen mit den benötigten, im Anspruch 6 beschriebenen Eigenschaften Polyhexamethylenguanidin-Chlorid synthesiert wird und daraus bei Bedarf durch eine Substitutionsreaktion das Phosphat und/oder Glukonat des Polyhexamethylenguanidins gewonnen wird.

18. Verpackungsmaterial nach Ansprüchen 13 bis 17,
**dadurch gekennzeichnet,**
**dass** es ein flexibles, flaches Erzeugnis, beispielweise ein Blatt oder eine Folie, darstellt.

19. Verpackungsmaterial nach Anspruch 18,
**dadurch gekennzeichnet,**
**dass** das erwähnte Erzeugnis geschichtet ausgebildet ist, wobei das biozide Polymer auf der Oberfläche derjenigen Schicht liegt, die für die Berührung mit den eingepackten Produkten bestimmt ist.

20. Verpackungsmaterial nach einem der Ansprüche 13 bis 19,
**dadurch gekennzeichnet,**
**dass** es einen Umschlag darstellt.

21. Einlegeblatt in eine Verpackung für verderbliche Produkte, vorzugsweise Lebensmittel,
**dadurch gekennzeichnet,**
**dass** auf der Oberfläche, die für die Berührung mit den eingepackten Produkten bestimmt ist, ein biozides Polymer in der Menge, die eine biozide Wirkung sicherstellt, enthalten ist, wobei es über die Fähigkeit verfügt, im Wesentlichen nicht in die erwähnten Produkte überzugehen.

22. Einlegeblatt nach Anspruch 21,
**dadurch gekennzeichnet,**
**dass** als biozides Polymer ein guanidinhaltiges Polymer mit einer Molekülmasse von mindestens 2000, vorzugsweise 4000-10000, verwendet wird.

23. Einlegeblatt nach den Ansprüchen 21 und 22,
**dadurch gekennzeichnet,**
**dass** als guanidinhaltiges Polymer Polyhexamethylenguanidin und/oder dessen Salze verwendet wird bzw. werden.

24. Einlegeblatt nach Anspruch 23,
**dadurch gekennzeichnet,**
**dass** als Polyhexamethylenguanidin-Salz Hydrochlorid und/oder Phosphat und/oder Glukonat verwendet wird.

25. Einlegeblatt nach Anspruch 24,
**dadurch gekennzeichnet,**
**dass** vorher zur Gewinnung von Plyhexamethylenguanidin-Salzen mit den nach Anspruch 6 benötigten Eigenschaften Polyhexamethylenguanidin-Hydrochlorid synthesiert wird und daraus bei Bedarf durch eine Substitutionsreaktion das Phosphat und/oder das Glukonat des Polyhexamethylenguanidin gewonnen wird.

## Claims

1. A method for the protection of products, preferably foods, from microbial spoilage during while they are stored in the package or are being packed,
**characterized in that**
by means of briefly treating the surface of the package or packaging material coming into contact with the products with a biocidal solution of guanidine-containing biocidal polymer having defined molecular properties and in a defined concentration range, the guanidine-containing biocidal polymer accumulates on the surface in the quantity that is sufficient for long-term protection of the products from spoilage, and it does not essentially pass over into the packaged product.

2. A package for perishable products, preferably foods,
**characterized in that**
at least that part of the package that is intended for contact with the products packed inside contains on its surface a biocidal polymer in the quantity that ensures a biocidal effect, and this polymer has the capability of essentially not passing over into the aforementioned products.

3. The package as defined by claim 2,
**characterized in that**
as the biocidal polymer, guanidine-containing polymer with a molecular mass of at least 2000 and preferably 2000-10000 is employed.

4. The package as defined by claim 3,
**characterized in that**
as the guanidine-containing polymer, polyhexamethylene guanidine and/or its salts are used.

5. The package as defined by claim 4,
**characterized in that**
as the polyhexamethylene guanidine salt, hydrochloride and/or phosphate and/or gluconate is used.

6. The package as defined by claim 5,
**characterized in that**
in obtaining the biocidal polymer used for treating the package and having the desired properties, polyhexamethylene guanidine hydrochloride is obtained beforehand by mixing guanidine hydrochloride and hexamethylene diamine at a temperature that is lower than the temperature at the onset of the polycondensation reaction, and the aforementioned reaction takes place at a pressure that is lower than atmospheric pressure; that the end product obtained has a polyhexamethylene guanidine hydrochloride content of at least 99.5 weight % and a molecular mass of at least 2000 and essentially has a linear structure; and that from that, as needed, polyhexamethylene guanidine phosphate and/or polyhexamethylene guanidine gluconate is obtained by means of a substitution reaction.

7. The package as defined by one of claims 2-6,
**characterized in that**
it is a container of glass, synthetic edible materials, or metal, for containing drinking water or mineral water, soft drinks, juices, or beer.

8. The package as defined by one of claims 2-7,
**characterized in that**
the material that contains the biocidal polymer on its surface forms an inner layer of the package.

9. The package as defined by claim 8,
**characterized in that**
its inner layer is formed by injection of a solution having the required concentration of the biocidal polymer into the package and/or by rinsing with the same solution and/or by filling with the solution and then pouring it out again and/or by the aforementioned injection with ensuing evacuation or ensuing blowing of carbonic acid gas or an inert gas or a mixture thereof through it.

10. The package as defined by one of claims 7-9,
**characterized in that**
for forming the inner layer, the aqueous solution of polyhexamethylene guanidine hydrochloride and/or polyhexamethylene guanidine phosphate and/or polyhexamethylene guanidine gluconate is used in the concentration range of 20-1000 mg/l, preferably 50-500 mg/l.

11. The package as defined by one of claims 7-10,
**characterized in that**
it is a bottle of glass or PET, or a bottle of some other synthetic material that is edible for noncarbonated water, and for forming the inner layer, the aqueous solution of polyhexamethylene guanidine hydrochloride and/or polyhexamethylene guanidine phosphate and/or polyhexamethylene guanidine gluconate is used in the concentration range of 50-500 mg/l, preferably 150-500 mg/l.

12. The package as defined by one of claims 3-10,
**characterized in that**
it is a bottle of glass or PET, or a bottle of some other synthetic edible material for noncarbonated water, and for forming the inner layer, the aqueous solution of polyhexamethylene guanidine hydrochloride and/or polyhexamethylene guanidine phosphate and/or polyhexamethylene guanidine gluconate is used in the concentration range of 50-250 mg/l.

13. A packaging material for perishable products, preferably foods,
**characterized in that**
the surface that is intended for contact with the product contains a biocidal polymer in the quantity that ensures a biocidal effect, and this polymer has the capability of essentially not passing over into the products.

14. The packaging material as defined by claim 13,
**characterized in that**
as the biocidal polymer, guanidine-containing polymer with a molecular mass of at least 2000 and preferably 2000-10000 is employed.

15. The packaging material as defined by claim 14,
**characterized in that**
as the guanidine-containing polymer, polyhexamethylene guanidine and/or its salts are used.

16. The packaging material as defined by claim 15,
**characterized in that**
as the polyhexamethylene guanidine salt, hydrochloride and/or phosphate and/or gluconate is used.

17. The packaging material as defined by claim 16,
**characterized in that**
for obtaining polyhexamethylene guanidine salts having the required properties described in claim 6, polyhexamethylene guanidine chloride is synthesized beforehand, and from that, as needed, the phosphate and/or the gluconate of the polyhexamethylene guanidine is obtained by means of a substitution reaction.

18. The packaging material as defined by claims 13-17,
**characterized in that**
it is a flexible, flat manufactured object, such as a sheet or a film.

19. The packaging material as defined by claim 18,
**characterized in that**
the aforementioned manufactured object is embodied in layered form, and the biocidal polymer rests on the surface of the particular layer that is intended for contact with the products packed inside.

20. The packaging material as defined by one of claims 13-19,
**characterized in that**
it is an envelope.

21. A insert sheet inserted into a package for perishable products, preferably foods, **characterized in that**
on the surface that is intended for contact with the product, a biocidal polymer is contained in the quantity that ensures a biocidal effect, and this polymer has the capability of essentially not passing over into the products.

22. The insert sheet as defined by claim 21,
**characterized in that**
as the biocidal polymer, guanidine-containing polymer with a molecular mass of at least 2000 and preferably 2000-10000 is employed.

23. The insert sheet as defined by claims 21 and 22,
**characterized in that**
as the guanidine-containing polymer, polyhexamethylene guanidine and/or its salts are used.

24. The insert sheet as defined by claim 23,
**characterized in that**
as the polyhexamethylene guanidine salt, hydrochloride and/or phosphate and/or gluconate is used.

25. The insert sheet as defined by claim 24,
**characterized in that**
for obtaining polyhexamethylene guanidine salts having the properties required according to claim 6, polyhexamethylene guanidine hydrochloride is synthesized beforehand, and from that, as needed, the phosphate and/or the gluconate of the polyhexamethylene guanidine is obtained by means of a substitution reaction.

## Revendications

1. Procédé de protection de produits, de préférence de produits alimentaires, contre l'altération microbienne, pendant leur conservation dans l'emballage ou emballés, **caractérisé en ce que**, par un traitement de courte durée de la surface de l'emballage ou du matériau d'emballage entrant en contact avec les produits avec une solution de polymères biocides contenant de la guanidine, présentant des propriétés moléculaires déterminées et dans une plage de concentration déterminée, le polymère biocide contenant de la guanidine est accumulé sur la surface dans la quantité qui est suffisante pour protéger les produits de l'altération pendant une durée prolongée et ne passe essentiellement pas dans le produit emballé.

2. Emballage pour produits périssables, de préférence pour des produits alimentaires, **caractérisé en ce qu'**au moins la partie de l'emballage qui est prévue pour être en contact avec les produits emballés contient sur sa surface un polymère biocide dans une quantité qui garantit une action biocide, ce polymère étant en outre en mesure de ne pas essentiellement passer dans les produits cités.

3. Emballage selon la revendication 2, **caractérisé en ce que** l'on utilise en tant que polymère biocide un polymère contenant de la guanidine et qui présente une masse moléculaire au moins égale à 2000, de préférence de 4000 à 10 000.

4. Emballage selon la revendication 3, **caractérisé en ce que** l'on utilise en tant que polymère contenant de la guanidine de la polyhexaméthylène-guanidine et/ou ses sels.

5. Emballage selon la revendication 4, **caractérisé en ce que** l'on utilise en tant que sel de polyhexaméthylène-guanidine un chlorhydrate et/ou un phosphate et/ou un gluconate.

6. Emballage selon la revendication 5, **caractérisé en ce que**, lors de la préparation du polymère biocide utilisé pour son traitement et présentant les propriétés souhaitées, on prépare au préalable un chlorhydrate de polyhexaméthylène-guanidine, où du chlorhydrate de guanidine et de l'hexaméthylènediamine sont mélangés à une température qui est inférieure à la température au début de la réaction de polycondensation, où la réaction citée se déroule sous une pression qui est inférieure à la pression atmosphérique, et où on utilise des modes d'exploitation de la pression et du chauffage tels que le produit final préparé présente une teneur en chlorhydrate de polyhexaméthylène-guanidine au moins égale à 99,5 % en masse et une masse moléculaire au moins égale à 2000 et possède essentiellement une structure linéaire, et qu'on prépare au besoin, par une réaction de substitution, du phosphate et/ou du gluconate de polyhexaméthylène-guanidine.

7. Emballage selon l'une des revendications 2 à 6, **caractérisé en ce qu'**il représente un récipient en verre, en matériau alimentaire synthétique ou en métal pour eau alimentaire ou eau minérale, boisson non alcoolisée, jus ou bière.

8. Emballage selon l'une des revendications 2 à 7, **caractérisé en ce que** le matériau qui contient le polymère biocide sur la surface forme une couche intérieure de l'emballage.

9. Emballage selon la revendication 8, **caractérisé en ce que** sa couche intérieure est formée par injection dans l'emballage d'une solution ayant la concentration nécessaire du polymère biocide et/ou par rinçage avec la même solution et/ou par remplissage avec déversement consécutif de la solution et/ou par l'injection citée avec obtention consécutive d'un vide ou soufflage consécutif d'un gaz au dioxyde de carbone ou d'un gaz inerte ou de leur mélange.

10. Emballage selon les revendications 7 à 9, **caractérisé en ce que**, pour former la couche intérieure, la solution aqueuse contient du chlorhydrate et/ou du phosphate et/ou du gluconate de polyhexaméthylène-guanidine dans une plage de concentration de 20 à 1000 mg/l, de préférence de 50 à 500 mg/l.

11. Emballage selon les revendications 7 à 10, **caractérisé en ce qu'**il représente une bouteille en verre ou en PET ou une bouteille composée d'un autre matériau alimentaire synthétique pour de la bière, où, pour former la couche intérieure, on utilise la solution aqueuse du chlorhydrate et/ou du phosphate et/ou du gluconate de polyhexaméthylène-guanidine dans une plage de concentration de 50 à 500 mg/l, de préférence de 150 à 500 mg/l.

12. Emballage selon les revendications 8 à 10, **caractérisé en ce qu'**il représente une bouteille en verre ou en PET ou une bouteille composée d'un autre matériau alimentaire synthétique pour de l'eau non gazeuse, où, pour former la couche intérieure, on utilise la solution aqueuse du chlorhydrate et/ou du phosphate et/ou du gluconate de polyhexaméthylène-guanidine dans une plage de concentration de 50 à 250 mg/l.

13. Matériau d'emballage pour produits périssables, de préférence pour produits alimentaires, **caractérisé en ce que** la surface qui est prévue pour le contact avec le produit contient un polymère biocide dans la quantité qui garantit une action biocide, celui-ci étant essentiellement en mesure de ne pas passer dans les produits.

14. Matériau d'emballage selon la revendication 13, **caractérisé en ce que** l'on utilise en tant que polymère biocide un polymère contenant de la guanidine et présentant une masse moléculaire au moins égale à 2000, de préférence de 4000 à 10 000.

15. Matériau d'emballage selon la revendication 14, **caractérisé en ce que** l'on utilise en tant que polymère contenant de la guanidine de la polyhexaméthylène-guanidine et/ou ses sels.

16. Matériau d'emballage selon la revendication 15, **caractérisé en ce que** l'on utilise en tant que sel de polyhexaméthylène-guanidine un chlorhydrate et/ou un phosphate et/ou un gluconate.

17. Matériau d'emballage selon la revendication 16, **caractérisé en ce qu'**avant la préparation des sels de polyhexaméthylène-guanidine ayant les propriétés nécessaires, décrites à la revendication 6, on synthétise du chlorure de polyhexaméthylène-guanidine et on prépare au besoin à partir de celui-ci, par une réaction de substitution, le phosphate et/ou le gluconate de la polyhexaméthylène-guanidine.

18. Matériau d'emballage selon les revendications 13 à 17, **caractérisé en ce qu'**il représente un produit plat et flexible, par exemple une feuille ou un film.

19. Matériau d'emballage selon la revendication 18, **caractérisé en ce que** le produit cité est formé en couches, le polymère biocide reposant sur la surface de la couche qui est définie pour se trouver en contact avec les produits emballés.

20. Matériau d'emballage selon l'une des revendications 13 à 19, **caractérisé en ce qu'**il représente une enveloppe.

21. Feuille intercalaire dans un emballage pour produits périssables, de préférence pour produits alimentaires, **caractérisée en ce qu'**est contenu sur la surface qui est définie pour se trouver en contact avec les produits emballés un polymère biocide dans la quantité qui garantit une action biocide, ce polymère étant essentiellement en mesure de ne pas passer dans les produits cités.

22. Feuille intercalaire selon la revendication 21, **caractérisée en ce que** l'on utilise en tant que polymère biocide un polymère contenant de la guanidine et présentant une masse moléculaire au moins égale à 2000, de préférence de 4000 à 10 000.

23. Feuille intercalaire selon les revendications 21 et 22, **caractérisée en ce que** l'on utilise en tant que polymère contenant de la guanidine de la polyhexaméthylène-guanidine et/ou ses sels.

24. Feuille intercalaire selon la revendication 23, **caractérisée en ce que** l'on utilise en tant que sel de polyhexaméthylène-guanidine un chlorhydrate et/ou un phosphate et/ou un gluconate.

25. Feuille intercalaire selon la revendication 24, **caractérisée en ce qu'**avant de préparer les sels de polyhexaméthylène-guanidine ayant les propriétés nécessaires, conformément à la revendication 6, on synthétise du chlorhydrate de polyhexaméthylène-guanidine et on prépare au besoin à partir ce celui-ci, par une réaction de substitution, le phosphate et/ou le gluconate de la polyhexaméthylène-guanidine.
